# EUROPEAN PATENT SPECIFICATION

(11) **EP 4 264 784 B1**
(45) Date of publication and mention of the grant of the patent: **08.07.2026**
(21) Application number: 20835828.3
(22) Date of filing: 21.12.2020
(51) Int. Cl.: H02K 1/14, H02K 15/022

(54) **STATOR METAL SHEET WITH RADIAL STATOR TEETH AND METHOD FOR MANUFACTURING THE STATOR METAL SHEET**
STATORBLECH MIT RADIALEN STATORZÄHNEN UND VERFAHREN ZUR HERSTELLUNG DES STATORBLECHS
TÔLE DE STATOR DOTÉE DE DENTS DE STATOR RADIALES ET SON PROCÉDÉ DE FABRICATION

(43) Date of publication of application: 25.10.2023
(73) Proprietor: Pierburg Pump Technology GmbH, 41460 Neuss (DE)
(72) Inventor: WERNER, Kornelius, 41460 Neuss (DE); HENKE, Toni, 41460 Neuss (DE)
(74) Representative: Eisenführ Speiser
(86) International application number: PCT/EP2020/087527
(87) International publication number: WO 2022/135680

(56) References cited:
- CN-A- 102 710 033
- CN-A- 102 710 034
- CN-U- 211 183 740
- JP-A- H11 289 721

## Description

The invention is directed to a method for manufacturing a stator metal sheet for a stator of an electric motor and to an associated stator metal sheet with stator teeth.

Typically, a stator of an electric motor is manufactured by stacking several identical stator metal sheets to a stack defining a solid stator body. The stator metal sheets are made of laminated electrical sheets manufactured, for example, by punching. The raw metal sheets are laminated with an electric insulation coating for reducing an electric shortcut between the adjacent layers of the stack. The stator metal sheet is punched as a circular ring, so that a significant offcut results causing relatively high material costs.

An example of such a stator metal sheet is disclosed in EP 2 507 896 B1. The raw metal sheet is magnetically anisotropic, i.e. the raw metal sheet is provided with a linear grain-oriented microstructure resulting from the rolling direction of the raw metal sheet. The stator metal sheet is provided with a linear magnetic orientation of the easy axis. Due to the substantially star-shaped arrangement of the stator teeth, the linear easy axis of the metal sheet results in a different and non-radial orientation of the easy axis in every stator tooth with respect to the radial direction of every tooth. As a result, the propagation of the magnetic fields within each stator tooth is different.

CN 102 710 034 A and CN 102 710 033 A define a stator metal sheet which is manufactured in a compressed arrangement.

It is an object of the invention to provide a cost-efficient stator metal sheet with good magnetic properties and a method for manufacturing the stator metal sheet.

This object is achieved by a method for manufacturing a stator metal sheet with the features of claim 1 and with a stator metal sheet according to claim 5.

A manufacturing method of a stator metal sheet for a stator of an electric motor according to the invention comprises the following manufacturing steps, wherein the stator metal sheet is provided with a closed ring-shaped stator metal sheet body, which comprises a plurality of stator teeth being connected by connection bridges with the two adjacent stator teeth, respectively, and wherein the connection bridges connect the pole shoes of the stator teeth:
In a first manufacturing step according to the invention, a pre-shaped stator metal sheet with a pre-shaped stator metal sheet body is manufactured of a raw sheet metal material, for example by punching the stator metal sheet. The stator teeth of the pre-shaped stator metal sheet are arranged in a geometrically compressed arrangement. A first half of the total number of stator teeth, for example, three adjacent stator teeth of in total six stator teeth, are oriented substantially parallel to each other, so that their centrelines are also substantially parallel to each other. The stator teeth of the first row extend from a longitudinal pre-shaped-stator plane transversally to the same side of the longitudinal plane. The stator teeth thereby define a first stator teeth row with a side-by-side arrangement of the substantially parallel stator teeth. The substantially parallel arrangement includes an angular deviation between the centrelines of adjacent stator teeth of the first row of up to 10°. Preferably, this angular deviation between the centrelines is less than 5°. In total, the angular deviation between all stator teeth, i.e. between the two outer and furthermost stator teeth of the first row is less than 90°.

The second half of the number of all the stator teeth, according to the mentioned example, the other three adjacent stator teeth of in total six stator teeth, are arranged in the same manner as the first half number of the stator teeth. All of the stator teeth of the second half are substantially parallel to each other and extend from the longitudinal plane of the pre-shaped stator teeth body transversally to the same side, but extend in the opposite transversal direction as the stator teeth of the first row. The second half of the number of all stator teeth in turn defines a second stator teeth row with a side-by-side arrangement of the stator teeth. The stator teeth of the second row are oriented equidirectionally, so that their centrelines are substantially parallel to each other. The substantially parallel arrangement includes an angular deviation between the centrelines of adjacent stator teeth of the second row of up to 10°. Preferably, this angular deviation between the centrelines is less than 5°. In total, the angular deviation between all stator teeth, i.e. between the two outer and furthermost stator teeth of the second row is less than 90°.

The stator teeth of the second stator teeth row are substantially antiparallel to the stator teeth of the first stator teeth row and extend in opposite transversal direction. The two stator teeth rows are arranged such that the centreline of each stator tooth of the first stator teeth row is substantially colinear to the centreline of the opposite substantially antiparallel stator tooth of the second stator teeth row. The longitudinal plane of the pre-shaped stator metal plane between the two stator teeth rows thereby defines a mirror plane. The substantially antiparallel arrangement includes an angular deviation between the centreline of one of the stator teeth of the first row and the centreline of the opposite stator tooth of the second row of up to 20°. Preferably, this angular deviation between the centrelines is less than 10°. In total, the angular deviation between one of the stator teeth of the first row and one of the stator teeth of the second row is less than 90°.

All stator teeth of each row are connected to each other by connection bridges, which can be substantially linear or slightly arc-shaped. The connection bridges are relatively thin and function as a film hinge during the deformation process deforming the pre-shaped stator metal sheet. The two stator teeth rows are connected to each other by a connection bridge at each longitudinal end of the pre-shaped stator metal sheet, which connects the end-sided stator teeth being at the same longitudinal end of the pre-shaped stator metal sheet. The two stator teeth rows and the connection bridges define a closed ring structure, wherein every stator tooth is on its both sides connected to another stator tooth via a connection bridge. The stator teeth and the connection bridges thereby define an elongated slot-like opening between the stator teeth rows.

In a second manufacturing step according to the invention, the pre-shaped longitudinal stator metal sheet is opened by deforming the connection bridges only. The two antiparallel stator teeth rows are uncompressed, for example by pulling apart the centre of each stator teeth row perpendicularly to the longitudinal plane of the pre-shaped stator metal sheet. Each row is pulled in the extending direction of the stator teeth referring to the longitudinal plane, so that the two rows are pulled in opposite transversal directions. The pre-shaped longitudinal stator metal sheet is pulled apart until the transversal extent is equal to the longitudinal extent, so that a circular ring sheet body is defined. As a result, every stator tooth preferably is extending radially outwards defining a star-shaped stator metal sheet with equiangularly arranged stator teeth and with a circular central rotor opening.

With the geometrically compressed arrangement, the material usage for the manufacturing of the pre-shaped stator metal sheet, for example by punching, is significantly reduced by reducing the offcut of the raw material. Compared to a state-of-the-art-like manufactured circular pole-star stator metal sheet with a circular rotor opening at the centre, the geometrically compressed pre-shaped stator metal sheet allows to punch an increased number of pre-shaped stator metal sheets from one raw metal sheet, which can be, for example, a coil or a blank. As the raw metal sheet is generally provided with a rectangular shape, the compressed stator metal sheet defining a substantially rectangular shape can be arranged in a very compact arrangement, which reduces the offcut significantly. This offcut can be further reduced by indenting the stator teeth of two adjacent compressed stator metal sheets into each other, so that a minimal offcut is produced at the edges of the raw metal sheet only. For example, the stator teeth of one pre-shaped stator metal sheet can be placed in the interspaces between the stator teeth of another adjacently provided pre-shaped stator metal sheet. Thereby the number of compressed stator metal sheets made from one raw metal sheet can be at least doubled compared to the number of a circular stator metal sheet being made from an identical raw metal sheet of the same size.

As the magnetic properties of electric conducting materials depend on the orientation of the magnetic easy axis, i.e. depend on the rolling direction of the raw material, the orientation of the microstructure in the finished stator metal sheet is essential for a homogeneous and undisturbed propagation of the magnetic field. State-of-the-art-manufactured circular stator metal sheets are provided with one equidirectional and linear magnetic easy axis orientation over the complete circular stator metal sheet. In contrast to that, the pre-shaped stator metal sheet being manufactured by the method according to the invention is preferably manufactured by taking into consideration the rolling direction of the raw sheet metal.

Preferably, the layout of the pre-shaped stator metal sheets at the raw anisotropic sheet metal material is arranged such that the stator teeth centrelines of both stator teeth rows are oriented substantially parallel to the rolling direction of the raw sheet metal. Due to the parallel and equidirectional orientation of the stator teeth of one stator teeth row and the antiparallel orientation of the stator teeth rows to each other, the orientation of the grains in the material of each stator tooth is parallel to its associated centreline. As a result, all stator teeth are provided with the same equal orientation of the magnetic easy axis referring to their centrelines. Thereby the equal oriented magnetic easy axis ensures a homogeneous propagation of the magnetic field in each stator tooth and a homogeneous propagation of the magnetic field over the complete stator.

The opening of the pre-shaped stator is preferably achieved by using a conical mandrel. The mandrel is inserted into the slot-like opening between the two stator teeth rows and widens the slot to a circular shape. Thereby, the stator metal sheet is deformed only at the connection bridges connecting the stator teeth, so that a circular ring sheet body with a star-shaped arrangement of the stator teeth is generated. With the conical mandrel, the deforming process is simple and cost-efficient and ensures relatively precisely formed stator metal sheets within an automated serial production.

The pre-shaped stator metal sheet is preferably manufactured by a punching process. Due to the short production cycle times, the punching process is a relatively cost-efficient process and is therefore in particular suitable for sheet metal parts with a complex contouring like stator metal sheets. Compared to cutting processes like laser-cutting or water jet cutting, the punching process cuts the metal sheet in one single working stroke and produces a sufficiently precise punched part just in a few seconds. The manufacturing by punching also allows to cut various stator metal sheets simultaneously with on working stroke, so that, for example, all pre-shaped stator metal sheets of a complete sheet metal blank can be punched simultaneously with one working stroke.

Additionally, the cutting edges are not exposed to a not substantial heat input that would affect the microstructure of the material or the lamination of the sheet metal as a thermal cutting process like laser-cutting would do. Thereby, an affection of the magnetic field resulting from a transformation of the microstructure of the stator material is avoided, so that a stator being manufactured by the method according to the invention is provided with a particularly homogeneous microstructure resulting in a relatively homogeneous magnetic field and thereby in a relatively high electric efficiency of the electric motor.

A stator metal sheet manufactured by the method according to the invention comprises several stator teeth, which are provided with an orientation of the microstructure being parallel to the stator tooth centreline. After deforming the pre-shaped stator metal sheet body into a circular ring sheet body, the stator teeth are preferably arranged such that they extend radially outwards and the centrelines of the stator teeth intersect in the centre, so that the stator metal sheet defines a pole-star with an equiangular arrangement of the stator teeth.

The specific arrangement of the stator teeth in rows before the opening causes locally an identical orientation of the microstructure and thereby an identical orientation of the magnetic easy axis in each stator tooth resulting from the arrangement on the raw sheet metal material with respect to its rolling direction, so that the orientation of the microstructure in each stator tooth is parallel to the stator tooth centreline. As a result, the microstructure in every stator tooth is oriented in the radial direction, so that the stator metal sheet is provided with a radially oriented microstructure. The magnetic properties of the stator metal sheet and, as a result, the magnetic properties of the stator are thereby significantly increased compared to a stator, manufactured of metal sheets being punched in a circular shape.

The motor stator defines a circular central rotor opening. The motor stator is thereby preferably used in an electric motor with an inner motor rotor rotating within the central rotor opening. The circular central rotor opening defines a constant circular ring gap between the motor stator and the circular motor rotor, which ensures a smooth driving of the electric motor over the entire speed range.

In a stator metal sheet manufactured by a method according to the invention, the connection bridges between the adjacent stator teeth have been plastically deformed. This plastic deformation results from the deformation process step during the manufacturing of the stator metal sheet. The plastic deformation of the connection bridges results in a distortion of the crystalline grid structure of the connection bridges material, so that the reluctance in the connection bridges is increased. The increased reluctance and the resulting decrease of the magnetic permeability of the plastically deformed connection bridges reduce the iron losses resulting from the magnetic short circuit over the connection bridges between the adjacent pole shoes. The magnetic permeability is thereby reduced by at least by 50%.

The stator body is defined by an outer-grooved pole star with equiangularly arranged and radially outwards extending stator teeth. Accordingly, the stator teeth are not directly connected over the outer circumference of the stator body. As a result, the stator coils can be wound with an electrical wire from the outside, so that winding methods are applicable, which allow an orthocyclic winding of the stator coils, for example flyer winding or linear winding methods.

Preferably, several stator metal sheets are stacked on top of each other to define a solid stator body. The identical laminated and electrically insulated stator metal sheets are congruently stacked together and are mechanically connected to a solid stator body, for example, by an adhesive bonding connection and /or by a form-locked connection like punch-packing. Due to the radial orientation of the microstructure of the stator teeth, the grain orientation and thereby the orientation of the magnetic easy axis is identical in every stator metal sheet of the stack, so that every pole of the finalized motor stator generates an exceptionally homogeneous magnetic field resulting in a relatively high electric efficiency of the electric motor.

An embodiment of the invention is described with reference to the enclosed drawings, wherein
figure 1 shows an embodiment of a stator metal sheet being manufactured by a method according to the invention in a pre-shaped state after a first manufacturing step in a top view,
figure 2 shows the stator metal sheet being manufactured of the pre-shaped stator metal sheet of figure 1 after a second manufacturing step in a top view,
figure 3 shows a nesting arrangement for punching several pre-shaped stator metal sheets of figure 1 from a raw sheet metal blank, and
figure 4 shows a stack of various stator metal sheets being manufactured of the pre-shaped stator metal sheet of figure 1 in a cross-sectional view.

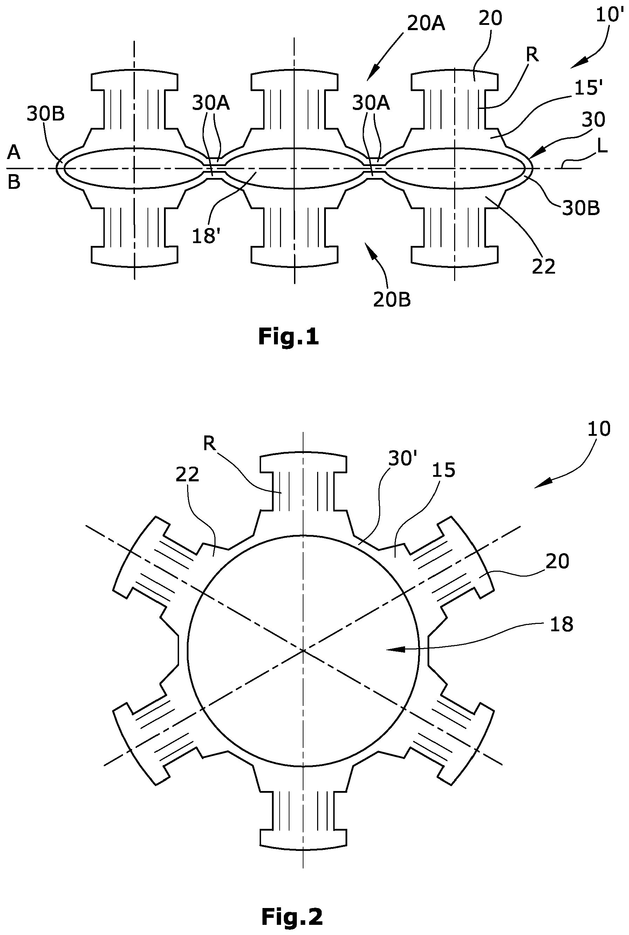

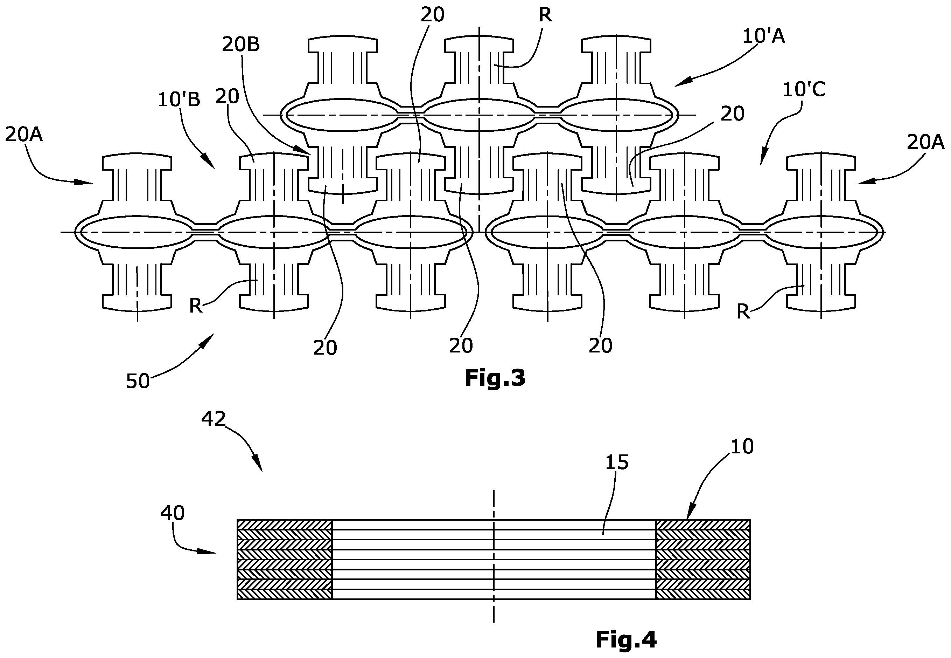

Figure 1 shows a pre-shaped stator metal sheet 10' of a motor stator 42 (shown in fig. 4) for an electric motor driving an automotive water circulation pump. The pre-shaped stator metal sheet 10' is the product of a first manufacturing step of a manufacturing method according to the invention. The pre-shaped stator metal sheet 10' is punched from a grain-oriented electrical sheet, which is made, for example, of an iron-silicon-alloy and is laminated with an electrical insulation coating. The pre-shaped stator metal sheet 10' is defined by a pre-shaped stator metal sheet body 15', which comprises six identically H-shaped stator teeth 20 being connected to each other by relatively thin hinge-type connection bridges 30.

Three adjacent stator teeth 20 of the in total six stator teeth 20 are arranged in a side-by-side arrangement, so that these stator teeth 20 are equidirectionally oriented and parallel to each other defining a first stator teeth row 20A. All of the stator teeth 20 of the first stator teeth row 20A extend orthogonally from a longitudinal cross-plane L to a first transversal side A of the pre-shaped stator metal sheet 10'. This cross-plane L is coincident to the longitudinal centreline of the pre-shaped stator metal sheet body 15'.

The other three adjacent stator teeth 20 of the in total six stator teeth 20 are also arranged in a side-by-side arrangement at the other transversal side B of the longitudinal cross-plane L of the pre-shaped stator metal sheet body 15' and thereby define a second stator teeth row 20B. These stator teeth 20 are equidirectionally oriented and parallel to each other and extend orthogonally from the longitudinal cross-plane L of the pre-shaped stator metal sheet 10' to the second transversal side B. The stator teeth 20 of the second stator teeth row 20B are oriented antiparallel to the stator teeth 20 of the first stator teeth row 20A, so that every stator tooth 20 of the first stator teeth row 20A has an opposite stator tooth 20 in the second stator teeth row 20B. The longitudinal cross-plane L being coincident with the centreline of the pre-shaped stator metal sheet body 15' thereby defines a mirror plane between the stator teeth rows 20A,20B, i.e. the centrelines of every two opposite stator teeth 20 of each stator teeth row 20A,20B are colinear.

The adjacent stator teeth 20 of each stator teeth row 20A,20B are connected to each other by thin strut-type and rectangular connection bridges 30A which are longitudinally arranged between the pole shoes 22 of the adjacent stator teeth 20. All of these connection bridges 30A are of the same length. The outer side of each of the two end-sided stator teeth 20 of the first stator teeth row 20A is connected to the opposite end-sided stator tooth 20 of the second stator teeth row 20B by an arc-shaped connection bridge 30B. These thin strut-type connection bridges 30B define an arc extending over an angle of 180°. The arc-length of the arc-shaped connection bridges 30B is substantially equal to the length of the rectangular connection bridges 30A connecting the stator teeth 20 of each stator teeth row 20A,20B. All connection bridges 30A,30B and all of the stator teeth 20 define an elongated slot-like opening 18' at the inside of the pre-shaped stator metal sheet 10'.

For producing a relatively low offcut during the punching of the pre-shaped stator metal sheet 10', several pre-shaped stator metal sheets 10' are arranged at a raw electrical sheet in a special nested punching arrangement 50, shown in figure 3. Therefore, the pre-shaped stator metal sheets 10' are arranged such that a first stator teeth 20 of one of the stator teeth rows 20B of a first pre-shaped stator metal sheet 10'A is placed in the interspace between two adjacent stator teeth 20 of one of the stator teeth rows 20A of a second pre-shaped stator metal sheet 10'B, which is oriented towards the stator teeth row 20B of the first pre-shaped stator metal sheet 10'A. A third pre-shaped stator metal sheet 10'C is arranged at the longitudinal end of the second pre-shaped stator metal sheet 10'B, so that their longitudinal centrelines are colinear and the pre-shaped stator metal sheets 10'B,10'C define a side-by-side arrangement. As a result, these two pre-shaped stator metal sheets 10'B,10'C in turn define an interspace for another second stator tooth 20 of the same stator teeth row 20B as the first stator tooth 20. The third stator tooth 20 of the stator teeth row 20B of the first pre-shaped stator metal sheet 10'A is placed in an interspace between two adjacent stator teeth 20 of the third pre-shaped stator metal sheet 10'C, etc. Thereby, the adjacently placed stator teeth 20 of the nested pre-shaped stator metal sheets 10'A,10'B,10'C are offset by a half stator tooth distance. The nested punching arrangement 50 results in an extremely effective material utilisation with a minimum offcut of the electrical sheet, so that the offcut is reduced by at least 50% and thereby the material costs are at least halved.

Within the punching arrangement 50 shown in figure 3, the pre-shaped stator metal sheets 10' are equidirectionally oriented, so that the centrelines of all stator teeth 20 of every pre-shaped stator metal sheet 10'A,10'B,10'C are oriented in rolling direction of the anisotropic raw electrical sheet. The centrelines of all stator teeth 20 are thereby oriented parallel to the longitudinal direction of the elongated grains within the microstructure R of the electrical sheet resulting in an equal magnetic easy axis orientation of all stator teeth 20 of every pre-shaped stator metal sheet 10'A,10'B,10'C etc.

Figure 2 shows a stator metal sheet 10 representing the product of a second manufacturing step of a manufacturing method according to the invention. In this second manufacturing step the pre-shaped stator metal sheet 10' of figure 1 is deformed into the stator metal sheet 10 of figure 2. By inserting a conical mandrel (not shown) into the slot-like opening 18' at the inside of the pre-shaped stator metal sheet 10' the geometrically compressed pre-shaped stator metal sheet 10' is geometrically uncompressed. With forwarding the conical mandrel into the slot-like opening 18', the diameter of the mandrel increases and widens the slot-like opening 18', so that the pre-shaped stator metal sheet 10' is geometrically uncompressed and the slot-like opening 18' approximates to a circular shape. At the end of the deformation process the widened slot-like opening 18' defines a circular rotor opening 18. Thereby the geometrically compressed pre-shaped stator metal sheet body 15' is opened into a circular ring sheet body 15 by plastically deforming only the connection bridges 30 between all adjacent stator teeth 20. Resulting from this plastic deformation of the connection bridges 30, the crystalline grid structure of the deformed connection bridges 30' is distorted, so that their magnetic permeability is decreased by at least 50%, so that a magnetic shortcut between two adjacent stator teeth 20 via the connection bridges 30 is reduced.

Due to the equal length of both the rectangular connection bridges 30A and the arc-shaped connection bridges 30B, the stator teeth 20 are arranged in an equiangular star-shape, wherein the centrelines of the stator teeth 20 extend radially outwards referring to the centre of the circular rotor opening 18. As the metallic microstructure R of the stator teeth 20 is oriented parallel to their centrelines resulting from the punching arrangement 50 of the pre-shaped stator metal sheet 10' with respect to the rolling direction of the raw electrical sheet, the magnetic easy axis is oriented radially. Each stator tooth 20 is thereby provided with the same radial orientation of the magnetic easy axis.

Figure 4 shows a stack 40 of several stator metal sheets 10 defining a motor stator 42 for an electric motor driving an automotive water circulation pump. The identical stator metal sheets 10 are stacked congruently and are mechanically connected to each other by punch-packing for defining a solid motor stator 42. As the stator metal sheets 10 are provided with an electrical insulation coating the eddy-currents between the single stator metal sheets 10 of the stack 40 are minimized. Resulting from the radial orientation of the microstructure R, the orientation of the magnetic easy axis in all stator teeth 20 of the stacked stator metal sheets 10 is identically oriented, so that the magnetic field of the stator 42, which is generated by the electric coils being wound circumferentially over the stator teeth 20 is exceptionally homogeneous.

## Claims

1. A method for manufacturing a stator metal sheet (10) for a motor stator of an electric motor, the stator metal sheet (10) being provided with a closed ring-shaped stator metal sheet body (15) defining a plurality of stator teeth (20), wherein all stator teeth (20) are connected by connection bridges (30) with the two adjacent stator teeth (20), respectively, and wherein the connection bridges (30) connect the pole shoes (22) of the stator teeth (20), said manufacturing method comprising the following steps:
a. manufacturing of a pre-shaped stator metal sheet (10') with a pre-shaped stator metal sheet body (15') with the stator teeth (20) being arranged in a geometrically compressed arrangement, wherein a first half of all of the stator teeth (20) being adjacent to each other are oriented substantially parallel to each other defining a first stator teeth row (20A) and the second half of all of the adjacent stator teeth (20) are arranged substantially parallel to each other defining a second stator teeth row (20B), wherein the stator teeth (20) of the second stator teeth row (20B) are oriented substantially antiparallel to the stator teeth (20) of the first stator teeth row (20A), and
b. opening of the pre-shaped and longitudinal stator metal sheet body (15') with the substantially antiparallel stator teeth rows (20A,20B) into a circular ring sheet body (15) by deforming the connection bridges (30),
so that the stator metal sheet (10) defines a circular central rotor opening (18).

2. The method for manufacturing a stator metal sheet (10) according to claim 1, wherein all of the stator teeth (20) are provided with a substantially equal metal sheet rolling direction (R').

3. The method for manufacturing a stator metal sheet (10) according to claim 1 or 2, wherein the pre-shaped stator metal sheet body (15') is deformed by a conical mandrel.

4. The manufacturing method for manufacturing a stator metal sheet (10) according to one of the preceding claims, wherein the manufacturing step for manufacturing the stator metal sheet (10) is provided by punching.

5. A stator metal sheet (10) manufactured according to the method with the features of one of the preceding claims, wherein all stator teeth (20) are provided with a radially oriented metallic microstructure (R), wherein the connection bridges (30) connect the pole shoes (22) of the stator teeth (20), wherein the stator metal sheet (10) defines a circular central rotor opening (18) and wherein all connection bridges (30') have been plastically deformed, so that the crystalline grid structure of the connection bridges (30') is distorted.

6. The stator metal sheet (10) according to claim 5, wherein the stator teeth (20) extend radially outwards.

7. The stator metal sheet (10) according to one of the claims 5-6, wherein several stator metal sheets (10) are stacked to define a stator body.

## Patentansprüche

1. Verfahren zum Herstellen eines Statorblechs (10) für einen Motorstator eines Elektromotors, wobei das Statorblech (10) mit einem geschlossenen ringförmigen Statorblechkörper (15) versehen ist, der eine Vielzahl von Statorzähnen (20) definiert, wobei alle Statorzähne (20) durch Verbindungsbrücken (30) mit jeweils den beiden benachbarten Statorzähnen (20) verbunden sind, und wobei die Verbindungsbrücken (30) die Polschuhe (22) der Statorzähne (20) verbinden, wobei das Herstellungsverfahren die folgenden Schritte umfasst:
a. Herstellen eines vorgeformten Statorblechs (10') mit einem vorgeformten Statorblechkörper (15'), wobei die Statorzähne (20) in einer geometrisch komprimierten Anordnung angeordnet sind, wobei eine erste Hälfte aller Statorzähne (20), die benachbart zueinander sind, im Wesentlichen parallel zueinander ausgerichtet ist und eine erste Statorzahnreihe (20A) bilden, und die zweite Hälfte aller benachbarten Statorzähne (20) im Wesentlichen parallel zueinander angeordnet ist und eine zweite Statorzahnreihe (20B) bildet, wobei die Statorzähne (20) der zweiten Statorzahnreihe (20B) im Wesentlichen antiparallel zu den Statorzähnen (20) der ersten Statorzahnreihe (20A) ausgerichtet sind, und
b. Aufweiten des vorgeformten und länglichen Statorblechkörpers (15') mit den im Wesentlichen antiparallelen Statorzahnreihen (20A, 20B) zu einem kreisförmigen Ringblechkörper (15) durch Verformung der Verbindungsbrücken (30),
sodass das Statorblech (10) eine kreisförmige zentrale Rotoröffnung (18) definiert.

2. Verfahren zum Herstellen eines Statorblechs (10) nach Anspruch 1, wobei alle Statorzähne (20) mit einer im Wesentlichen gleichen Blechwalzrichtung (R') versehen sind.

3. Verfahren zum Herstellen eines Statorblechs (10) nach Anspruch 1 oder 2, wobei der vorgeformte Statorblechkörper (15') durch einen konischen Dorn verformt wird.

4. Verfahren zum Herstellen eines Statorblechs (10) nach einem der vorstehenden Ansprüche, wobei der Herstellungsschritt zum Herstellen des Statorblechs (10) durch Stanzen erfolgt.

5. Statorblech (10), das nach dem Verfahren mit den Merkmalen eines der vorstehenden Ansprüche hergestellt wurde, wobei alle Statorzähne (20) mit einer radial ausgerichteten metallischen Mikrostruktur (R) versehen sind, wobei die Verbindungsbrücken (30) die Polschuhe (22) der Statorzähne (20) verbinden, wobei das Statorblech (10) eine kreisförmige zentrale Rotoröffnung (18) definiert und wobei alle Verbindungsbrücken (30') plastisch verformt wurden, so dass die kristalline Gitterstruktur der Verbindungsbrücken (30') verzerrt ist.

6. Statorblech (10) nach Anspruch 5, wobei sich die Statorzähne (20) radial nach au-βen erstrecken.

7. Statorblech (10) nach einem der Ansprüche 5-6, wobei mehrere Statorbleche (10) gestapelt sind, um einen Statorkörper zu bilden.

## Revendications

1. Procédé de fabrication d'une feuille de métal de stator (10) pour un stator de moteur d'un moteur électrique, la feuille de métal de stator (10) étant dotée d'un corps (15) de feuille de métal de stator en forme d'anneau fermé définissant une pluralité de dents de stator (20), dans lequel toutes les dents de stator (20) sont reliées par des ponts de liaison (30) aux deux dents de stator adjacentes (20), respectivement, et dans lequel les ponts de liaison (30) relient les épanouissements polaires (22) des dents de stator (20), ledit procédé de fabrication comprenant les étapes suivantes :
a. la fabrication d'une feuille de métal de stator préformée (10') avec un corps (15') de feuille de métal de stator préformée avec les dents de stator (20) agencées en un agencement géométriquement comprimé, dans lequel une première moitié de toutes les dents de stator (20) qui sont adjacentes les unes aux autres sont orientées sensiblement parallèles les unes aux autres, définissant une première rangée de dents de stator (20A) et la seconde moitié de toutes les dents de stator adjacentes (20) sont agencées sensiblement parallèles les unes aux autres, définissant une deuxième rangée de dents de stator (20B), dans lequel les dents de stator (20) de la deuxième rangée de dents de stator (20B) sont orientées sensiblement antiparallèlement aux dents de stator (20) de la première rangée de dents de stator (20A), et
b. l'ouverture du corps (15') de feuille de métal de stator préformée et longitudinale avec les rangées de dents de stator sensiblement antiparallèles (20A, 20B) en un corps (15) de feuille en forme d'anneau circulaire par déformation des ponts de liaison (30),
de sorte que la feuille de métal de stator (10) définit une ouverture de rotor centrale circulaire (18).

2. Procédé de fabrication d'une feuille de métal de stator (10) selon la revendication 1, dans lequel toutes les dents de stator (20) sont dotées d'une direction de roulage de feuille de métal (R') sensiblement égale.

3. Procédé de fabrication d'une feuille de métal de stator (10) selon la revendication 1 ou 2, dans lequel le corps (15') de feuille de métal de stator préformée est déformé par un mandrin conique.

4. Procédé de fabrication d'une feuille de métal de stator (10) selon l'une des revendications précédentes, dans lequel l'étape de fabrication pour la fabrication de la feuille de métal de stator 10) est réalisée par poinçonnage.

5. Feuille de métal de stator (10) fabriquée selon le procédé ayant les caractéristiques de l'une des revendications précédentes, dans laquelle toutes les dents de stator (20) sont dotées d'une microstructure métallique orientée radialement (R), dans laquelle les ponts de liaison (30) relient les épanouissements polaires (22) des dents de stator (20), dans laquelle la feuille de métal de stator (10) définit une ouverture de rotor centrale circulaire (18) et dans laquelle tous les ponts de liaison (30') ont été déformés plastiquement, de sorte que la structure en réseau cristalline des ponts de liaison (30') est gauchie.

6. Feuille de métal de stator (10) selon la revendication 5, dans laquelle les dents de stator (20) s'étendent radialement vers l'extérieur.

7. Feuille de métal de stator (10) selon l'une des revendications 5 et 6, dans laquelle plusieurs feuilles de métal de stator (10) sont empilées pour définir un corps de stator.
